# EUROPEAN PATENT SPECIFICATION

(11) **EP 2 942 118 B1**
(45) Date of publication and mention of the grant of the patent: **17.02.2021**
(21) Application number: 14199553.0
(22) Date of filing: 22.12.2014
(51) Int. Cl.: B09C 1/02, B09C 1/08, B09C 1/00

(54) **In-situ chemical fixaton of metal contaminants**
Chemische In-situ-Fixierung von Metallverunreinigungen
Fixation chimique in situ de contaminants métalliques

(30) Priority: 30.12.2013 FR 1363669
(43) Date of publication of application: 11.11.2015
(73) Proprietor: Environmental Technology and Investment Corporation, Boca Raton, FL 33496 (US)
(72) Inventor: Haskins, Stanley Charles, Golden, CO Colorado 80403 (US)
(74) Representative: Gevers & Orès

(56) References cited:
- CN-B- 102 642 951
- US-A- 3 037 847
- US-A1- 2002 003 116
- US-A1- 2011 198 071
- ARTIOLA J F ET AL: "IN SITU TREATMENT OF ARSENIC CONTAMINATED SOIL FROM A HAZARDOUS INDUSTRIAL SITE: LABORATORY STUDIES", WASTE MANAGEMENT, ELSEVIER, NEW YORK, NY, US, vol. 10, no. 1, 31 January 1990 (1990-01-31), pages 73-78, XP000180053, ISSN: 0956-053X, DOI: 10.1016/0956-053X(90)90072-S

## Description

### BACKGROUND OF THE INVENTION

### Field of the Invention

The present invention relates to in-situ fixation of metal contaminants in soil and/or groundwater.

### Description of the Related Art

The treatment of contaminated soils and groundwater is an important aspect of environmental science and particularly, is relevant in respect to uncontrolled hazardous waste disposal sites. The most common methods for site remediation include excavation and landfill disposal. While these methods are known to remove contaminants, both methods are costly and in some cases difficult if not impossible to perform. More recently, research has focused on the conversion of contaminants contained in soil and groundwater based upon the development of on-site and *in situ* treatment technologies. These technologies focus on the removal of contaminants through physical methods or the in-situ treatment of contaminants utilizing chemical or biological methods.

Physical methods of removing metallic contaminants focus on the utilization of pump and treat technology. Chemical methods of removing metallic contaminants focus on chemical changes of valence states, either reduction or oxidation, so as to convert the metallic contaminants to less harmful or less mobile states. The use of strong reductants have been shown to be effective at converting the valence state of chromium VI, a very mobile and toxic form of chromium, to chromium III, a less mobile and less toxic form.

Arsenic as a metal contaminant demonstrates a more mobile valence state, arsenic III (As ⁺³) that migrates freely in groundwater and is particularly toxic. Consequently, in-situ arsenic treatment in soil and groundwater has focused on the binding or the fixing the arsenic to an iron complex that precipitates and either can be filtered from water in an aboveground treatment system, or left to settle within the soil matrix under in-situ conditions. The conventional arsenic treatment process is straight forward within a drinking water treatment facility. Specifically, in a conventional arsenic treatment process, extracted groundwater is mixed with an iron solution and hydrogen peroxide; the peroxide oxidizes As ⁺³ to As ⁺⁵, the dissolved oxygen concentration increases due to the addition of the peroxide, iron then forms oxyhydroxide using the dissolved oxygen and the As ⁺⁵ binds to iron-oxyhydroxide. This entire complex is a solid and is then filtered from the groundwater

Document US 2002/003116 A discloses a method for removing arsenic, present in the +3 oxidation state, from aqueous solutions based on adding a ferrous salt and hydrogen peroxide and precipitating arsenic as As+5 in a mixed iron-arsenic oxyhydroxide precipitate.

The treatment of arsenic by the conventional process is much more difficult outside of a wastewater treatment plant and under in-situ conditions since distribution and mixing of the separate solutions, iron and peroxide, is impractical due to the rapid nature of the reactions and the instability of hydrogen peroxide when in contact with organic material within the soil matrix. Under in-situ conditions, the reactions occur so quickly after injection into the groundwater-saturated soil matrix and the peroxide decomposes to oxygen and water rapidly producing abundant volumes of gas within the soil matrix. It is possible to conduct a treatment program with these methods, however the distribution radius around the injection location is very limited and the injectable volumes are small. These limitations are due to the rapid reaction rates which produce rapid and significant volumes of gas which often cause fluid, groundwater and injected solutions, to surface or daylight soon after injection commences.

### BRIEF SUMMARY OF THE INVENTION

Embodiments of the present invention address deficiencies of the art in respect to treating metal contaminants in the ground and provide a novel and non-obvious system and method for treating arsenic contaminants in an in situ environment, for instance soil, groundwater or bedrock. In an embodiment of the invention, a method of treating arsenic contaminants in an in situ environment contaminated with arsenic includes preparing an aqueous chelated iron solution and a stabilized oxidizing agent. The method also includes adding both the aqueous chelated iron solution and the stabilized oxidizing agent to the in situ environment in an amount sufficient to promote the co-precipitation of iron-arsenic oxyhydroxides. In this regard, the solution and agent can be added alternately following and preceding separate water injections into the in situ environment. Thereafter, the arsenic is oxidized from As⁺³ to As⁺⁵ and the iron is oxidized from Fe⁺² to Fe⁺³.

In one aspect of the embodiment, the aqueous chelated iron solution includes an effective amount of an iron selected from the group consisting of Fe (II) chelates, Fe (III) chelates and combinations thereof. In another aspect of the embodiment, the stabilized source of the oxidizing agent is a peroxide selected from the group consisting of hydrogen peroxide, sodium peroxide and calcium peroxide. In yet another aspect of the embodiment, the aqueous chelated iron solution is maintained at a pH of from about 5 to 8. In even yet another aspect of the embodiment, the stabilized source of the oxidizing agent is stabilized, for example with a stabilizer selected from the group consisting of an acid, a salt, and a mixture of acid and salt, and as yet additional examples, with a stabilizer selected from the group consisting of phosphoric acid, monopotassium phosphate and a combination of phosphoric acid and monopotassium.

Additional aspects of the invention will be set forth in part in the description which follows, and in part will be obvious from the description, or may be learned by practice of the invention. The aspects of the invention will be realized and attained by means of the elements and combinations particularly pointed out in the appended claims. It is to be understood that both the foregoing general description and the following detailed description are exemplary and explanatory only and are not restrictive of the invention, as claimed.

### BRIEF DESCRIPTION OF THE SEVERAL VIEWS OF THE DRAWINGS

The accompanying drawings, which are incorporated in and constitute part of this specification, illustrate embodiments of the invention and together with the description, serve to explain the principles of the invention. The embodiments illustrated herein are presently preferred, it being understood, however, that the invention is not limited to the precise arrangements and instrumentalities shown, wherein:
Figure 1 is a pictorial illustration of a process for treating arsenic contaminants in an in situ environment; and,
Figure 2 is a flow chart illustrating a process for treating arsenic contaminants in an in situ environment.

### DETAILED DESCRIPTION OF THE INVENTION

Embodiments of the invention provide for treating arsenic contaminants in an in situ environment. In accordance with an embodiment of the invention, a stabilized oxidizing agent can be prepared, for instance a stabilized liquid hydrogen peroxide agent, as can an aqueous chelated iron solution. Both the stabilized oxidizing agent and the aqueous chelated iron solution can be alternately introduced through injection screens into the in situ environment so as to oxidize and fix arsenic present in the in situ environment thus remediating the arsenic contamination within the in situ environment.

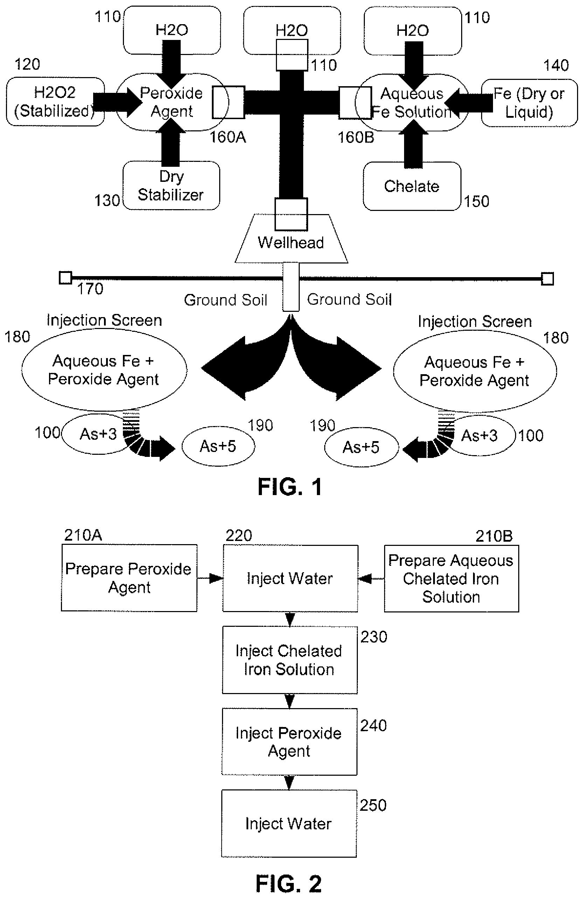

In further illustration, Figure 1 pictorially shows a process for treating arsenic contaminants in an in situ environment. As shown in Figure 1, a peroxide agent 160A can be prepared through the addition of water 110 to a peroxide source 120 and a dry stabilizer 130. Concurrently, an aqueous iron solution 160B can be prepared through the addition of water 110 to dry or liquid iron 140 and chelates 150. Thereafter, each of the water 110, the peroxide agent 160A and the aqueous iron solution 160B can be introduced into an in situ environment 170 by way of injection screening performed, for instance, by direct push injection rods coupled to a wellhead, or an injection well coupled to a wellhead. The injection screen 180 can act to oxidize arsenic +3 100 present in the in situ environment 170 into arsenic +5190 which can be fixed to iron-oxyhydroxide.

In yet further illustration, Figure 2 is a flow chart illustrating a process for treating arsenic contaminants in an in situ environment. Beginning in block 210A, a peroxide agent is prepared. The peroxide agent can include, for instance, a peroxide such as hydrogen peroxide, sodium peroxide or calcium peroxide. Also, the source of the peroxide is stabilized, for instance using a stabilizer such as an acid, a salt, or a mixture of acid and salt. More particularly, the stabilizer can be monopotassium phosphate or a combination of phosphoric acid and monopotassium. The stabilized source of oxidizing agent is, for example, peroxide in water at concentration of up to 70% by weight.

Concurrently, in block 210B an aqueous chelated iron solution is prepared. The aqueous iron solution can include an effective amount of an iron selected from at least one member of the group consisting of Fe (II) chelates, Fe (III) chelates and combinations thereof. The aqueous iron solution can be maintained at a pH of from about 5 to 8 by adding a pH modifying agent to the aqueous iron solution, the modifying agent including by way of example water or chelating agents.

Thereafter, both the peroxide agent and the aqueous iron solution can be added to the in situ environment such as soil, groundwater, or fractured bedrock. In this regard, the in situ environment can be soil or groundwater with moderate to high permeability. Alternatively, the in situ environment can be soil or groundwater with low to moderate permeability. In either case, the peroxide agent can be added into the in situ environment in an effective concentration and in an amount sufficient to promote the co-precipitation of iron-arsenic oxyhydroxides..

In one aspect of the embodiment, the peroxide agent and the aqueous iron solution can be added to the in situ environment utilizing injection screens. Of note, the injection screens can be introduced into the capillary fringe of the in situ environment, the vadose zone of the in situ environment, or the saturated zone. The injection can be performed under elevated pressure from about five to one-hundred pounds per square inch, wherein the peroxide agent and the aqueous iron solution are introduced alternately through a wellhead into the in situ environment following an initial water flush and followed by an additional water flush as shown in blocks 230 through 250. However, it is to be understood that the peroxide agent and the aqueous solution may be introduced in any order into the in situ environment, and in one embodiment of the invention, both can be introduced continuously into the in situ environment. In another embodiment, multiple doses of the source of the oxidizing agent and the aqueous chelated iron solution are added to the in situ environment.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. The embodiment was chosen and described in order to best explain the principles of the invention and the practical application, and to enable others of ordinary skill in the art to understand the invention for various embodiments with various modifications as are suited to the particular use contemplated as defined in the appended claims.

## Claims

1. A method of treating arsenic contaminants in an in situ environment, comprising the steps of:
preparing an aqueous chelated iron solution comprising an effective amount of a iron selected from at least one member of the group consisting of Fe (II) chelates, Fe (III) chelates and combinations thereof;
adding both a stabilized source of an oxidizing agent stabilized with a stabilizer to said in situ environment in an effective concentration, and also said aqueous iron solution to said in situ environment in the presence of said source of the oxidizing agent in an amount sufficient to promote the co-precipitation of iron-arsenic oxyhydroxides;. and,
oxidizing arsenic in the in situ environment and oxidizing iron in the in situ environment.

2. The method of claim 1 wherein said stabilized source of the oxidizing agent is a stabilized source of peroxide selected from the group consisting hydrogen peroxide, sodium peroxide and calcium peroxide.

3. The method of claim 1, wherein the stabilized source of the oxidizing agent is stabilized with a stabilizer selected from the group consisting of an acid, a salt, and a mixture of acid and salt.

4. The method of claim 3, wherein the stabilizer is selected from the group consisting of phosphoric acid, monopotassium phosphate and a combination of phosphoric acid and monopotassium.

5. The method of claim 1, wherein the stabilized source of oxidizing agent is peroxide in water at concentration of up to 70% by weight.

6. The method of claim 1, further comprising maintaining said aqueous chelated iron solution at a pH of from about 5 to 8 by adding a pH modifying agent to the aqueous iron solution.

7. The method of claim 6, wherein the pH modifying agent is selected from water and chelating agents.

8. The method of claim 1, comprising alternately adding the stabilized source of the oxidizing agent and the aqueous chelated iron solution to the in situ environment.

9. The method of claim 8, wherein the aqueous chelated iron solution is first added to the in situ environment followed by the stabilized source of the oxidizing agent.

10. The method of claim8, wherein the stabilized source of the oxidizing agent is first added to the in situ environment followed by said aqueous chelated iron solution.

11. The method of claim 1, comprising continuously adding both the stabilized source of the oxidizing agent and also the aqueous chelated iron solution to the in situ environment.

12. The method of claim 1, wherein the in situ environment comprises at least one of soils and groundwater with moderate to high permeability.

13. The method of claim 1, wherein the in situ environment comprises at least one of soils and groundwater with low to moderate permeability.

14. The method of claim 1, wherein the in situ environment is selected from the group consisting of soil, groundwater, and fractured bedrock.

## Patentansprüche

1. Verfahren zum Behandeln von Arsenverunreinigungen in eine In-situ-Umgebung, umfassend die Schritte:
Zubereiten einer wässrigen durch Chelatoren stabilisierten Eisenlösung, umfassend eine wirksame Menge eines Eisens, ausgewählt aus mindestens einem Element der Gruppe, bestehend aus Fe (II)-Chelaten, Fe (III)-Chelaten und Kombinationen davon;
Hinzufügen von beiden, einer stabilisierten Quelle eines Oxidationsmittels, das mit einem Stabilisator stabilisiert ist, zu der In-situ-Umgebung in einer wirksamen Konzentration, und auch der wässrigen Eisenlösung zu der In-situ-Umgebung in der Gegenwart der Quelle des Oxidationsmittels in einer ausreichenden Menge, um die Co-Präzipitation von Eisen-Arsen-Oxyhydroxiden zu fördern; und
Oxidieren von Arsen in der In-situ-Umgebung und Oxidieren von Eisen in der In-situ-Umgebung.

2. Verfahren nach Anspruch 1, wobei die stabilisierte Quelle des Oxidationsmittels eine stabilisierte Quelle von Peroxid ist, ausgewählt aus der Gruppe, bestehend aus Wasserstoffperoxid, Natriumperoxid und Kalziumperoxid.

3. Verfahren nach Anspruch 1, wobei die stabilisierte Quelle des Oxidationsmittels mit einem Stabilisator stabilisiert ist, ausgewählt aus der Gruppe, bestehend aus einer Säure, einem Salz und einem Gemisch aus Säure und Salz.

4. Verfahren nach Anspruch 3, wobei der Stabilisator ausgewählt ist aus der Gruppe, bestehend aus Phosphorsäure, Monokaliumphosphat und einer Kombination von Phosphorsäure und Monokalium.

5. Verfahren nach Anspruch 1, wobei die stabilisierte Quelle von Oxidationsmittel Peroxid in Wasser bei Konzentration von bis zu 70 Gew.-% ist.

6. Verfahren nach Anspruch 1, weiter umfassend Halten der wässrigen, durch Chelatoren stabilisierten Eisenlösung bei einem pH-Wert von etwa 5 bis 8 durch Hinzufügen eines pH-Wert modifizierenden Mittels zu der wässrigen Eisenlösung.

7. Verfahren nach Anspruch 6, wobei das pH-Wert modifizierende Mittel ausgewählt ist aus Wasser und Chelatbildnern.

8. Verfahren nach Anspruch 1, umfassend abwechselndes Hinzufügen der stabilisierten Quelle des Oxidationsmittels und der wässrigen, durch Chelatoren stabilisierten Eisenlösung zu der In-situ-Umgebung.

9. Verfahren nach Anspruch 8, wobei die wässrige, durch Chelatoren stabilisierte Eisenlösung zuerst zu der In-situ-Umgebung zugegeben wird, gefolgt von der stabilisierten Quelle des Oxidationsmittels.

10. Verfahren nach Anspruch 8, wobei die stabilisierte Quelle des Oxidationsmittels zuerst zu der In-situ-Umgebung zugegeben wird, gefolgt von der wässrigen, durch Chelatoren stabilisierten Eisenlösung.

11. Verfahren nach Anspruch 1, umfassend kontinuierliches Hinzufügen beider, der stabilisierten Quelle des Oxidationsmittels, und auch der wässrigen, durch Chelatoren stabilisierten Eisenlösung zu der In-situ-Umgebung.

12. Verfahren nach Anspruch 1, wobei die In-situ-Umgebung mindestens eines von Erden und Grundwasser mit mäßiger bis hoher Permeabilität umfasst.

13. Verfahren nach Anspruch 1, wobei die In-situ-Umgebung mindestens eines von Erden und Grundwasser mit geringer bis mäßiger Permeabilität umfasst.

14. Verfahren nach Anspruch 1, wobei die In-situ-Umgebung ausgewählt ist aus der Gruppe, bestehend aus Erde, Grundwasser und gebrochenem Felsgestein.

## Revendications

1. Procédé de traitement de contaminants d'arsenic dans un environnement in situ, comprenant les étapes consistant à :
préparer une solution aqueuse de fer chélaté comprenant une quantité efficace d'un fer sélectionné parmi au moins un élément du groupe consistant en des chélates de Fe (II), des chélates de Fe (III) et des combinaisons de ceux-ci ;
ajouter à la fois une source stabilisée d'un agent oxydant stabilisé avec un stabilisateur audit environnement in situ en une concentration efficace, et également ladite solution aqueuse de fer audit environnement in situ en présence de ladite source de l'agent oxydant en une quantité suffisante pour promouvoir la coprécipitation d'oxyhydroxydes de fer-arsenic ; et
oxyder de l'arsenic dans l'environnement in situ et oxyder du fer dans l'environnement in situ.

2. Procédé selon la revendication 1 dans lequel ladite source stabilisée de l'agent oxydant est une source stabilisée de peroxyde sélectionnée dans le groupe consistant en peroxyde d'hydrogène, peroxyde de sodium et peroxyde de calcium.

3. Procédé selon la revendication 1, dans lequel la source stabilisée de l'agent oxydant est stabilisée avec un stabilisateur sélectionné dans le groupe consistant en un acide, un sel, et un mélange d'acide et de sel.

4. Procédé selon la revendication 3, dans lequel le stabilisateur est sélectionné dans le groupe consistant en acide phosphorique, phosphate monopotassique et une combinaison d'acide phosphorique et de monopotassium.

5. Procédé selon la revendication 1, dans lequel la source stabilisée d'agent oxydant est du peroxyde dans de l'eau à une concentration jusqu'à 70 % en poids.

6. Procédé selon la revendication 1, comprenant en outre un maintien de ladite solution aqueuse de fer chélaté à un pH d'environ 5 à 8 en ajoutant un régulateur de pH à la solution aqueuse de fer.

7. Procédé selon la revendication 6, dans lequel le régulateur de pH est sélectionné parmi de l'eau et des agents chélateurs.

8. Procédé selon la revendication 1, comprenant un ajout alternativement de la source stabilisée de l'agent oxydant et de la solution aqueuse de fer chélaté à l'environnement in situ.

9. Procédé selon la revendication 8, dans lequel la solution aqueuse de fer chélaté est tout d'abord ajoutée à l'environnement in situ suivie de la source stabilisée de l'agent oxydant.

10. Procédé selon la revendication 8, dans lequel la source stabilisée de l'agent oxydant est tout d'abord ajoutée à l'environnement in situ suivie de ladite solution aqueuse de fer chélaté.

11. Procédé selon la revendication 1, comprenant un ajout en continu à la fois de la source stabilisée de l'agent oxydant et également de la solution aqueuse de fer chélaté à l'environnement in situ.

12. Procédé selon la revendication 1, dans lequel l'environnement in situ comprend au moins un de sols et d'eau souterraine avec une perméabilité modérée à élevée.

13. Procédé selon la revendication 1, dans lequel l'environnement in situ comprend au moins un de sols et d'eau souterraine avec une perméabilité faible à modérée.

14. Procédé selon la revendication 1, dans lequel l'environnement in situ est sélectionné dans le groupe consistant en sol, eau souterraine, et assise rocheuse fracturée.
